(19) Europäisches Patentamt
European Patent Office
Office européen des brevets

(11) **EP 3 309 520 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
***G01D 5/28*** (2006.01)

(21) Anmeldenummer: **16194205.7**

(22) Anmeldetag: **17.10.2016**

(54) **WINKELMESSSYSTEM ZUM BESTIMMEN EINES DREHWINKELS**

ANGLE MEASUREMENT SYSTEM FOR DETERMINATION OF AN ANGLE OF ROTATION

SYSTÈME DE MESURE D'ANGLE DESTINÉ À DÉTERMINER UN ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.04.2018 Patentblatt 2018/16**

(73) Patentinhaber: **SICK STEGMANN GmbH**
**78166 Donaueschingen (DE)**

(72) Erfinder: **Hopp, David**
**78166 Donaueschingen (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
EP-A1- 2 950 056      DE-A1- 3 939 905
DE-A1- 10 340 931     DE-B3-102014 200 633
JP-A- H0 850 036

**Beschreibung**

Die Erfindung betrifft ein Winkelmesssystem zum Bestimmen eines Drehwinkels einer drehenden Welle nach dem Oberbegriff des Anspruchs 1.

Für die Ermittlung eines mechanischen Drehwinkels existiert eine Fülle unterschiedlichster Wirkprinzipien, Technologien und Systeme, welche in Auflösung und Genauigkeit variieren. Um die Genauigkeit bzw. die Reproduzierbarkeit der Winkelmessung zu gewährleisten, wird bezüglich der mechanischen Komponenten, deren Toleranzen und deren Justage meist nicht unerheblicher Aufwand getrieben.

Ein Ziel bei der Suche nach neuen Winkelmesstechnologien ist daher immer auch das Bestreben eine möglichst robuste bzw. toleranzunabhängige Technologie zu finden, die insbesondere einen Einfluss der mechanischen Freiheitsgrade im Raum des Systems auf die Winkelmessung reduziert. Beispielsweise wird bei der Winkelmessung einer der sechs möglichen Freiheitsgrade, nämlich eine der drei Drehungen im Raum als Signal detektiert. Dieses Signal wird dann prinzipiell von den fünf weiteren Freiheitsgraden gestört. Daher sind unterschiedlich komplexe Ansätze vorgesehen, um den Einfluss der mechanischen Toleranzen zu minimieren und/oder zu kompensieren. Die Ansätze umfassen aufwändige Lagerung oder Justage oder auch eine redundante Signalerfassung. So lässt sich beispielsweise eine Exzentrizität einer klassischen Codescheibe durch eine diametrale symmetrische Anordnung zweier Leseköpfe kompensieren. Systeme, die tatsächlich robust gegen nahezu alle Freiheitsgrade sind, werden häufig in einer symmetrischen Anordnung aufgebaut, die wiederum aufwändig und teuer ist.

Bei optischen Sensoren beispielsweise ist es häufig wichtig, eine Lichtquelle, die als Sender fungiert, bezüglich eines Detektors oder Detektorarrays, das als Empfänger fungiert, entsprechend genau zu positionieren. Dies erfordert allerdings meistens eine genaue Positionierung der ortsfesten Komponenten (Sender und Empfänger) zueinander. Zusätzlich muss auch die drehende Codescheibe bezüglich des Senders und/oder des Detektors justiert werden.

Die relative Position zweier Sensorkomponenten zueinander unterliegt nach dem Aufbau des Sensors einer unvermeidbaren Ungenauigkeit in lateraler Richtung, z.B. in Richtung einer Oberfläche einer Leiterplatte, auf der die Sensorkomponenten angeordnet sind, oder einer beliebigen anderen Ebene. Auch ein potentieller Höhenversatz oder eine Kippung können zu Ungenauigkeiten führen.

In vielen Sensoranwendungen werden die Signalqualität bzw. die Genauigkeit gesteigert, indem Komponenten des Sensoraufbaus aktiv justiert werden. D. h. die Sensorkomponenten werden durch zusätzliche Mechanismen, wie beispielsweise Verstellung von optischen Elementen, aktiv zueinander ausgerichtet. Dies bedeutet allerdings, dass ein Mehraufwand an Aufbautechnik, Zeit und Kosten erforderlich ist. Ferner wird die Kompaktheit des Sensors verschlechtert.

Aus EP 2 657 652 B1 ist eine Sensoranordnung zum Messen eines Drehwinkels bekannt, bei der ein Polarisator an einer Welle derart montiert ist, dass eine Normale des Polarisators einen Winkel ungleich Null zu einer Drehachse der Welle aufweist. Hierdurch führt der Polarisator bei einer Drehung der Welle eine taumelnde Bewegung aus. Gegenüber dem Polarisator sind ein Lichtsender und ein Empfänger angeordnet, so dass ein vom Lichtsender ausgesendeter Lichtstrahl vom Polarisator polarisiert und von dem Polarisator auf dem Empfänger rückreflektiert wird. Der Empfänger detektiert eine durch den Polarisator verändernde Lichtintensität des polarisierten und rückreflektierten Lichtstrahls, so dass eine Auswerteeinheit aus der detektierten Lichtintensität den Drehwinkel des Polarisators und damit der Welle ermitteln kann.

Durch die auf Reflexion basierende Anordnung der Sensoranordnung, insbesondere des Lichtsenders, des Polarisators und des Empfängers zueinander, ist eine Bestimmung des Drehwinkels sehr stark von einer genauen Anordnung der Komponenten abhängig. Das heißt, die Genauigkeit der Bestimmung des Drehwinkels ist von einer lateralen Bewegung der Welle stark abhängig. Die Genauigkeit ist zusätzlich von einer Verkippung der Welle abhängig.

Ferner erfordert die Bestimmung und Auswertung der Lichtintensität eine komplexe Auslegung der Auswerteeinheit.

JP H08 50036 A offenbart ein Winkelmesssystem, insbesondere einen Potentiometer, mit den Merkmalen des Oberbegriffs des Anspruchs 1, wobei eine Exzentrizität der Welle als Exzentrizitätswert bekannt sein muss, um in die Berechnung eines Bestimmungsfehlers bei der Berechnung des Drehwinkels mitberücksichtigt zu werden.

Aus der EP 2 950 056 A1 ist ein Winkelmesssystem bekannt, bei dem ein Reflektor mit einem Winkel zur Normalen der Drehachse auf einer Welle angebracht wird, so dass eine reflektierte Wellenfront nach Durchgang durch ein Linsenarray ein charakteristisches Signal auf einem Detektorarray erzeugt.

Es ist daher eine Aufgabe der Erfindung, ein Winkelmesssystem zum Bestimmen eines Drehwinkels einer drehenden Welle der eingangs genannten Art zur Verfügung zu stellen, das darauf ausgelegt ist, invariant gegenüber mechanischer Toleranz, insbesondere einer lateralen und axialen Bewegung der Welle, zu sein. Die Aufgabe wird erfindungsgemäß durch ein Winkelmesssystem mit den Merkmalen des Anspruchs 1 gelöst.

Hieraus ergibt sich der Vorteil, dass durch eine taumelnde Bewegung des transparenten Modulators und das transmittierende Prinzip die Bestimmung des Drehwinkels unabhängig der Freiheitsgrade der Welle durchgeführt werden kann. Ferner ist durch die Bestimmung des Drehwinkels direkt aus der Position des Lichtpunktes auf dem Empfänger eine einfachere Auswertelogik für die Auswerteeinheit vorsehbar.

Hierdurch ist ein Vorteil des erfindungsgemäßen Winkelmesssystems, dass es einfach, kostengünstig und kompakt herstellbar ist.

Weiterhin ermöglicht die Berücksichtigung des Korrekturwertes vorteilhafterweise eine Selbstkalibrierung des Winkelmesssystems, so dass die Bestimmung des Drehwinkels noch genauer sein kann.

Gemäß einem weiteren bevorzugten Ausführungsbeispiel sind der Auswerteeinheit Nullpunktkoordinaten eines Koordinatensystems des Empfängers als Ausgangskoordinaten vorgegeben, und ist mit Bezug auf die Nullpunktkoordinaten einen ersten Lichtpunkt der Gruppe aus mindestens drei Lichtpunkten berechenbar. Vorteilhafterweise ist der Drehwinkel anhand einer Formel berechenbar $\rho_i = \arctan2(y_i - y_m / x_i - x_m)$, wobei $\rho_i$ einen aktuellen Drehwinkel repräsentiert, $y_i$ und $x_i$ die aktuellen y- und x-Koordinaten des aktuellen Lichtpunktes sind, $y_m$ und $x_m$ die Koordinaten eines Mittelpunktes einer vorhergehenden Gruppe von Lichtpunkten bzw. des Ausgangsmittelpunktes sind, und i und $m = i-1$ natürliche Zahlen sind.

Daraus ergibt sich der Vorteil, dass, wenn sich eine mechanische Veränderung des Winkelmesssystems in einem aus- oder eingeschalteten Zustand ergeben hat, das Winkelmesssystem nach einem Einschalten oder einem Anfahren zunächst einen potentiell ungenaueren Zustand bezüglich der Winkelposition besitzt, ein Drehwinkelmessfehler sich im Zuge der Drehung der Welle durch die Berechnung der Mittelpunkte und die Mitberücksichtigung der Abweichung zwischen denselben kontinuierlich minimiert. Diese Selbstkalibrierung geschieht insbesondere bereits hinreichend innerhalb einer ersten Umdrehung beim Anfahren des Modulators. Zusätzlich ermöglicht die Selbstkalibrierung auch eine kontinuierliche Minimierung des Drehwinkelmessfehlers während des Betriebs des Winkelmesssystems, wenn beispielsweise die Welle unter Hitzebildung während des Betriebs sich ausdehnt, so dass sich ihre relative Lage ändern kann.

Weiterhin weisen gemäß einem bevorzugten Ausführungsbeispiel die Lichtpunkte einer Gruppe einen vorgegebenen geometrischen Abstand zueinander auf, der vorzugsweise einer Mindestlänge eines Vektors zwischen zwei Lichtpunkten entspricht. Hierdurch ist eine präzise kontinuierliche Berechnung der Lichtpunkte möglich.

Gemäß einem weiteren bevorzugten Ausführungsbeispiel ist eine Folge der Gruppen aus mindestens drei Lichtpunkten derart erstellt, dass kontinuierlich bei einer nachfolgenden Gruppe der erste Lichtpunkt der vorherigen Gruppe entfernt wird und ein auf den dritten Lichtpunkt der vorherigen Gruppe folgender Lichtpunkt hinzugefügt wird. Vorteilhafterweise ist entsprechend der Folge der Gruppen aus mindestens drei Lichtpunkten eine Folge von zu der jeweiligen Gruppe gehörenden Mittelpunkten ermittelbar.

Weiterhin unterzieht gemäß einem bevorzugten Ausführungsbeispiel die Auswerteeinheit die erfassten Lichtpunkte und/oder die errechneten Mittelpunkte mittels einer Mittelung oder einer statistischen Vorhersage zu erwartender Werte einer Plausibilitätsprüfung. Es ergibt sich der Vorteil, dass das erfindungsgemäße Winkelmesssystem auf einfachster Art und Weise präzise und sicher aufgebaut sein kann.

Gemäß einem weiteren bevorzugten Ausführungsbeispiel umfasst der Empfänger ein PDS-Element oder ein Photodiodenarray, wodurch das Winkelmesssystem vorteilhafterweise kostengünstig aufgebaut sein kann.

Gemäß einem weiteren bevorzugten Ausführungsbeispiel ist der zumindest eine Empfänger ausgebildet, einen sich auf dem Empfänger bewegenden und durch eine flächige Beleuchtung des Modulators entstehenden Schatten zu detektieren, und ist die Auswerteeinheit ausgebildet, aus einer Position des Schattens auf dem Empfänger den entsprechenden Drehwinkel zu bestimmen. Hierdurch ergibt sich der Vorteil, dass nicht nur durch die Erfassung des Lichtpunktes, sondern auch durch die Erfassung des Schattens eine genaue Bestimmung des Drehwinkels möglich ist.

Im Folgenden wird die Erfindung anhand von Ausführungsbeispielen unter Bezugnahme auf die Zeichnungen im Einzelnen erläutert. In den Zeichnungen zeigen:

| | |
|---|---|
| Figur 1 | eine schematische Darstellung eines Ausführungsbeispiels des erfindungsgemäßen Winkelmesssystems; |
| Figur 2 | eine schematische Detaildarstellung eines Verlaufs eines Lichtpunktes auf einem Empfänger des Ausführungsbeispiels; |
| Figur 3.1 - 3.3 | jeweils eine schematische Darstellung einer erfindungsgemäßen Bestimmung der Lichtpunkte und der Drehwinkel in Abhängigkeit eines Ausgangsmittelpunktes; und |
| Figur 4 - 9 | schematische Darstellung einer beispielshaften Bestimmung der Lichtpunkte und der Drehwinkel. |

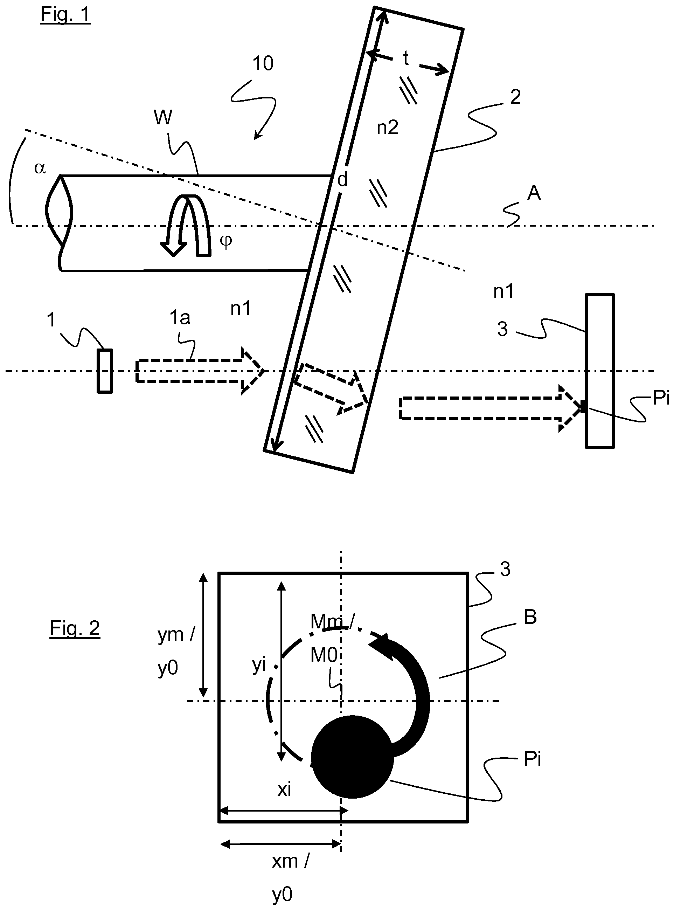

In der Figur 1 ist eine schematische Darstellung eines Ausführungsbeispiels eines erfindungsgemäßen Winkelmesssystems 10 zum Bestimmen eines Drehwinkels φ einer drehenden Welle W dargestellt. Die dargestellten Komponenten des Winkelmesssystems 10 sind ein Lichtsender 1 zum Aussenden eines Lichtstrahls 1a, ein transparenter Modulator 2 zum Modulieren des ausgesendeten und durch den Modulator 2 durchgehenden Lichtstrahls 1a, und ein Empfänger 3 zum Empfangen des modulierten Lichtstrahls 1a.

Der transparente Modulator 2 umfasst eine planparallele Platte mit einer vorgegebenen Dicke t, einem vorgegebenen Durchmesser d und einer vorgegebenen Brechungszahl n2, so dass der Lichtstrahl 1a idealerweise parallel zu einer Drehachse A der Welle W durch den Modulator 2 tritt und dabei sowohl bei Eintritt in dem Modulator 2 mit der vorgegebenen Brechungszahl n2 als auch bei Austritt aus dem Modulator 2 in ein den Modulator 2 umgebenes Medium mit einer Brechungszahl n1 gebrochen wird.

Der Modulator 2 ist derart auf der Welle W montiert, so dass eine Normale des Modulators 2 einen Winkel $\alpha$ ungleich Null zu der Drehachse A der Welle W aufweist, wodurch der Modulator 2 bei einer Drehbewegung der Welle W eine taumelnde Bewegung gegenüber dem Empfänger 3 ausführt. Hierbei entsteht durch die taumelnde Bewegung des Modulators 2 eine laterale Ablenkung bzw. ein Versatz des Lichtstrahls 1a orthogonal zur Lichtrichtung in Abhängigkeit der Drehung der Welle W. Der abgelenkte Lichtstrahl 1a trifft auf den Empfänger 3 und beschreibt auf dem Empfänger 3 in Form eines Lichtpunktes Pi eine Bahn B, im Idealfall eine Kreisbahn wie in der Figur 2 schematisch dargestellt und im Folgenden noch beschrieben. Der Empfänger 3 empfängt den auf der Bahn B auf dem Empfänger 3 bewegenden Lichtpunkt Pi und gibt ein entsprechendes Empfängersignal aus, das unmittelbar von der Drehung der Welle W abhängt.

Der Empfänger 3 umfasst eine photosensitive Fläche und erfasst mit der Drehung der Welle W die auftreffenden Lichtpunkte Pi ortauflösend in 2-Dimensionen. Mit anderen Worten, der Empfänger 3 erfasst die auftreffenden Lichtpunkte Pi zweidimensional bezogen auf ein Koordinatensystem des Empfängers 3, so dass die Koordinaten xi und yi der Lichtpunkte Pi bestimmt sind.

Figur 2 zeigt schematisch einen Verlauf eines Lichtpunktes Pi auf dem Empfänger 3. Ein Mittelpunkt Mm des Empfängers 3 weist die Bezugskoordinaten xm und ym auf, wobei der Mittelpunkt M0 des Empfängers 3 als Ausgangsmittelpunkt mit den Koordinaten x0 und y0 für die Bestimmung der Lichtpunkte Pi und vor allem der nachfolgend beschriebenen Mittelpunkte Mm der Bahnen B der Lichtpunkte Pi durch die nicht dargestellte Auswerteeinheit dient.

Der Empfänger 3 kann idealerweise aus einem PSD-Element ("position sensitive device") oder einem Photodiodenarray bestehen, das in zwei Dimensionen misst. Das heißt, die beiden lateralen Richtungen x und y orthogonal zur Lichtrichtung bzw. zur Drehachse A der Welle W werden separat durch den Empfänger 3 erfasst und als analoge Richtungssignale bzw. Empfängersignale ausgegeben. Hierbei ist vorteilhafterweise eine Erfassung einer Beleuchtungsintensität zusätzlich möglich.

Die nicht dargestellte Auswerteeinheit, beispielsweise ein Controller mit einer Auswertelogik, erhält die Empfängersignale vom Empfänger 3, wertet die Empfängersignale aus und bestimmt aus einer Position des Lichtpunktes Pi auf dem Empfänger 3 den zugehörigen Drehwinkel $\varphi$i der Welle W. Hierdurch ist eine einfache direkte Bestimmung des/der Drehwinkel $\varphi$i der Welle W

mittels einer Position eines Lichtpunktes Pi bzw. der Positionen der Lichtpunkte Pi auf dem Empfänger 3 möglich. Die taumelnde Bewegung des Modulators 2 bewirkt eine unabhängige Bestimmung der Drehwinkel $\varphi$i von den lateralen Freiheitsgraden und dem axialen Freiheitsgrad der Welle W, so dass sowohl die lateralen Freiheitsgrade als auch der axiale Freiheitsgrad der Welle W keinen Einfluss auf die Bestimmung des Drehwinkels $\varphi$i haben.

Insbesondere ermittelt die Auswerteeinheit des erfindungsgemäßen Winkelmesssystems 10 mit Bezug auf die vorgegebenen Bezugskoordinaten x0 und y0 die Positionen der Lichtpunkte Pi auf dem Empfänger 3 und daraus, wie bereits erwähnt, wiederum die jeweiligen Drehwinkel $\varphi$i der Welle W. Der Drehwinkel $\varphi$i ist insbesondere anhand der Formel $\varphi i = \arctan^2 [(yi - ym) / (xi - xm)]$ berechenbar, wobei $\varphi$i einen aktuellen Drehwinkel repräsentiert, yi und xi die aktuellen y- und x-Koordinaten des aktuellen Lichtpunktes sind, ym und xm die Koordinaten eines Mittelpunktes einer vorhergehenden Gruppe von Lichtpunkten bzw. des Ausgangsmittelpunktes M0 sind, und i und m=i-1 natürliche Zahlen sind.

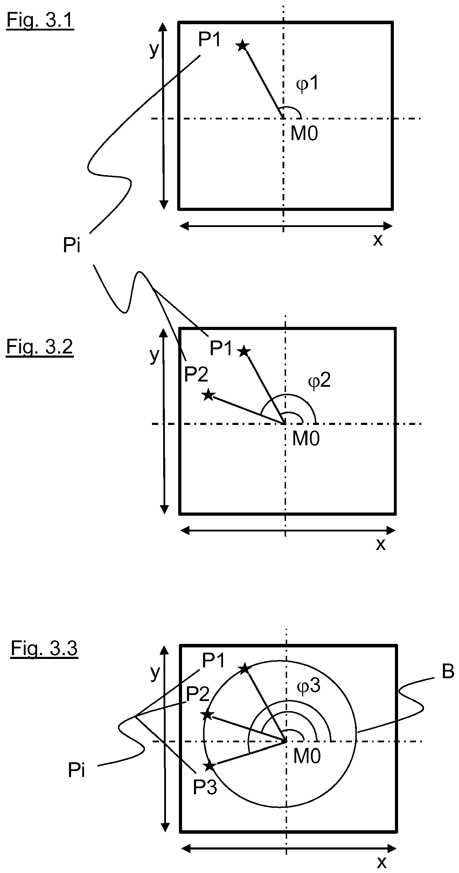

Hierbei unterteilt die Auswerteeinheit vorzugsweise kontinuierlich eine Folge von in einem vorgegebenen Abstand folgenden Lichtpunkten in Gruppen aus jeweils mindestens drei nacheinander folgenden Lichtpunkten P1,...Pi und berechnet zu jeder Gruppe einen jeweils zugehörigen Mittelpunkt M0,...Mm einer zugehörigen Bahn B auf dem Empfänger 3, wie in den Figuren 3.1 bis 9 dargestellt und im Folgenden im Detail beschrieben, wobei die Auswerteeinheit eine Abweichung zwischen zwei berechneten Mittelpunkten M0... Mm von zwei nacheinander folgenden Gruppen von Lichtpunkten Pi bei der Bestimmung des Drehwinkels $\varphi$i als Korrekturwert für den Drehwinkel $\varphi$i mitberücksichtigt. Hierdurch ist eine kontinuierliche Berücksichtigung eines Versatzes der Bahn B durch eine Verkippung der Welle W bei der Bestimmung der Drehwinkel $\varphi$i möglich, so dass eine Selbstkalibrierung des Winkelmesssystems 10 erzielbar ist.

Die Ermittlung des Drehwinkels $\varphi$i mittels den Koordinaten der Lichtpunkte Pi wird nachfolgend anhand der Figuren 3.1 bis 9 näher beschrieben.

Die Auswerteeinheit erhält von dem Empfänger 3 das Empfängersignal eines ersten Lichtpunktes P1 auf dem Empfänger 3 mit den Koordinaten x1 und y1. Mittels der bekannten bzw. vorgegebenen Koordinaten x0 und y0 des Ausgangsmittelpunktes MO, bestimmt die Auswerteeinheit anhand der obigen Formel einen ersten Drehwinkel $\varphi$1 aus einem Vektor zwischen dem Ausgangsmittelpunkt M0 und dem ersten Lichtpunkt P1.

Analog zu der Bestimmung des ersten Lichtpunktes P1 werden alle folgenden Lichtpunkte Pi, insbesondere ein zweiter Lichtpunkt P2 und ein dritter Lichtpunkt P3, ermittelt, so dass entsprechende Drehwinkel $\varphi$i, insbesondere ein zweiter und dritter Drehwinkel $\varphi$2 und $\varphi$3 gemäß den Figuren 3.2 und 3.3, bestimmt werden.

Die Auswerteeinheit führt die beschriebene Bestimmung der Lichtpunkte Pi kontinuierlich durch, so dass die Drehwinkel φi zu der entsprechenden Bahn B der Lichtpunkte Pi entsprechend bestimmbar sind.

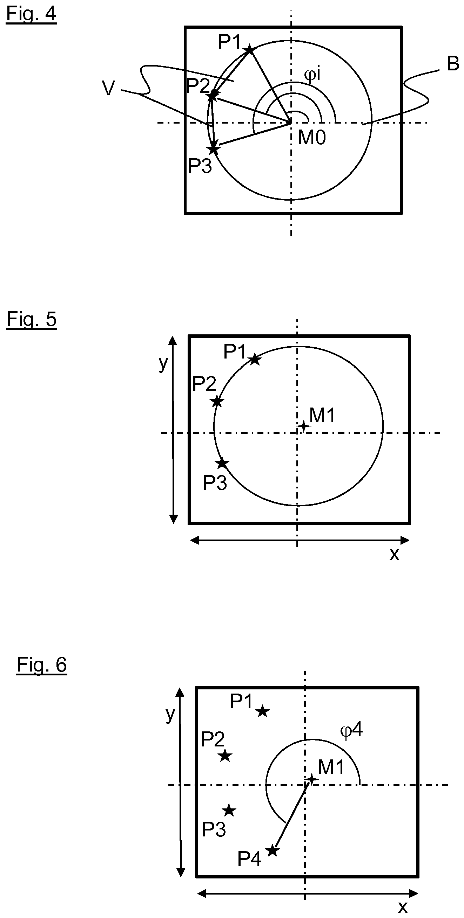

Vorzugsweise teilt die Auswerteeinheit mindestens drei Lichtpunkte, in diesem Ausführungsbeispiel die Lichtpunkte P1, P2 und P3, zu einer ersten Gruppe von Lichtpunkten ein. Die Lichtpunkte P1, P2 und P3 der ersten Gruppe weisen vorteilhafterweise einen vorgegebenen geometrischen Abstand zueinander auf, der vorzugsweise eine Mindestlänge eines Vektors V zwischen zwei Lichtpunkten P1 und P2, P2 und P3 entspricht - Figur 4.

Anhand der Koordinaten der Lichtpunkte P1, P2 und P3 der ersten Gruppe berechnet die Auswerteeinheit, wie in der Figur 5 dargestellt, einen zu der Gruppe zugehörigen Mittelpunkt M1, der durch das im Realfall toleranzbehaftete Winkelmesssystem 10 von dem Ausgangsmittelpunkt M0 der Bahn B abweichen kann. Zur Bestimmung des "realen" Mittelpunktes M1 der Bahn der Lichtpunkte P1, P2 und P3 wird ein lineares Gleichungssystem mit den Koordinaten der Lichtpunkte P1, P2 und P3 gelöst, so dass die Koordinaten x1 und y1 des realen Mittelpunktes M1 der Gruppe der Lichtpunkte P1, P2 und P3 erhältlich sind.

Alle auf dem Lichtpunkt P3 folgenden Lichtpunkte Pi, beispielsweise Lichtpunkt P4 in der Figur 6, werden bezogen auf die Koordinaten x1 und y1 des Mittelpunktes M1 berechnet, so dass die folgenden Drehwinkel φ4.... φi bezogen auf die Koordinaten des realen Mittelpunktes M1 bestimmt werden. Hierbei wird vorteilhafterweise die Abweichung zwischen dem Ausgangsmittelpunkt M0 und dem folgenden realen Mittelpunkt M1 bei der Bestimmung des Drehwinkels φ4 bzw. der Drehwinkel φi als Korrekturwert mitberücksichtigt. Ein durch das toleranzbehaftete Winkelmesssystem 10 resultierender Drehwinkelmessfehler wird dadurch kontinuierlich vermieden.

Sobald der Lichtpunkt P4 und damit der Drehwinkel φ4 durch die Auswerteeinheit ermittelt sind, teilt die Auswerteeinheit weitere mindestens drei Lichtpunkte, in der Figur 6 die Lichtpunkte P2, P3 und P4, zu einer weiteren Gruppe von Lichtpunkten ein, wobei die Lichtpunkte P2, P3 und P4 der weiteren Gruppe vorzugsweise ebenfalls den vorgegebenen geometrischen Abstand zueinander aufweisen. Mit anderen Worten, eine Folge von Gruppen aus mindestens drei Lichtpunkten P1, P2 und P3; P2, P3 und P4;... wird kontinuierlich derart erstellt, dass kontinuierlich bei einer nachfolgenden Gruppe der erste Lichtpunkt (P1 in der Figur 6) der vorherigen Gruppe entfernt und ein auf den dritten Lichtpunkt P3 der vorherigen Gruppe folgender Lichtpunkt (P4 in der Figur 6) hinzugefügt werden.

Entsprechend diesem Ausführungsbeispiel wird ein zu der neuen Gruppe von Lichtpunkten P2, P3 und P4 zugehöriger Mittelpunkt M2 durch die Auswerteeinheit errechnet. Bezogen auf den neuen Mittelpunkt M2 errechnet die Auswerteeinheit den Drehwinkel φ5 des

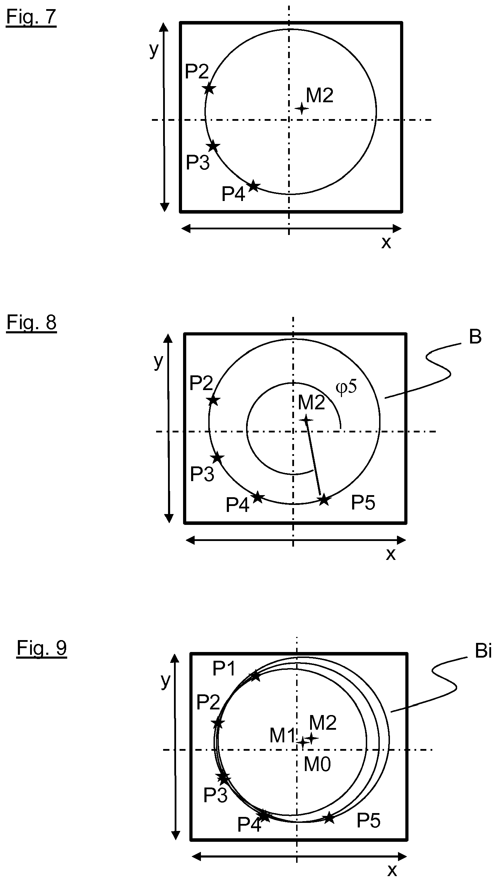

Lichtpunktes P5. Hierdurch berücksichtigt die Auswerteeinheit vorteilhafterweise eine Abweichung zwischen den Mittelpunkten M1 und M2 bei der Bestimmung des Drehwinkels φ5 des Lichtpunktes P5. Das heißt, die reale Position der Bahn B in der Figur 8 mit dem Mittelpunkt M2 wird zur Berechnung des Drehwinkels φ5 des Lichtpunktes P5 und damit zur Vermeidung des Drehwinkelmessfehlers verwendet, der bei der Berechnung bezüglich der vorherig berechneten Bahn B mit dem Mittelpunkt M1 entsteht.

Alternativ zu den oben beschriebenen bevorzugten Ausführungsbeispielen, ist der Empfänger 3 derart ausgebildet, dass der Empfänger 3 anstatt des Lichtpunktes Pi einen sich auf dem Empfänger 3 bewegenden und durch eine flächige Beleuchtung des Modulators 2 entstehenden Schatten detektiert. Hierdurch ist ein Einsatz von beispielsweise preisgünstigeren Lichtsendern 1 möglich. Die flächige Beleuchtung des Modulators 2 ermöglicht wiederum eine andere Anordnung des Lichtsenders 1, des Modulators 2 und des Empfängers 3 zueinander als eine "punktuelle" Bestrahlung des Modulators 2, so dass eine breitere Auswahl an Anordnungsmöglichkeiten gegeben ist.

Hierbei ist die Auswerteeinheit derart ausgebildet, dass die Auswerteeinheit aus einer Position des Schattens auf dem Empfänger 3 den entsprechenden Drehwinkel φi bestimmt. Das heißt, anstatt des Lichtpunktes Pi wird mittels des Schattens der Drehwinkel φi der Welle W ermittelt.

Entsprechend unterteilt die Auswerteeinheit kontinuierlich, analog wie mit den Lichtpunkten P1,...Pi, eine Folge von in einem vorgegebenen Abstand folgenden Schatten in Gruppen aus jeweils mindestens drei nacheinander folgenden Schatten und errechnet zu jeder Gruppe einen jeweils zugehörigen Mittelpunkt M0,...Mm der zugehörigen Bahn B, wobei die Auswerteeinheit eine Abweichung zwischen zwei berechneten Mittelpunkten M0,... Mm von zwei nacheinander folgenden Gruppen von Schatten bei der Bestimmung des Drehwinkels φi als Korrekturwert für den Drehwinkel φi mitberücksichtigt. Hierbei ist die geometrische Form des Schattens beliebig, beispielsweise Punkt oder Kreis, solange die Form während ihrer Bewegung auf der Bahn B innerhalb der photosensitiven Fläche des Empfängers 3 bleibt.

Die Berechnung immer neuer Mittelpunkte Mm aus immer neuen Gruppen aus mindestens drei Lichtpunkte P1,...Pi bzw. Schatten führt zu einer permanenten Nachführung des Bezugs für die Bestimmung des Drehwinkels bzw. der Drehwinkel φi. Das heißt, wenn sich die Bahn Bi der Lichtpunkte Pi durch statische oder dynamische mechanische Einflüsse, wie beispielsweise beim Zusammenbau oder im Stillstand oder im Betrieb, verschiebt oder sich in ihr Radius verändert, kann der dadurch entstehende Drehwinkelmessfehler unmittelbar nach seiner Entstehung für die nachfolgenden Drehwinkel φi mittels des erfindungsgemäßen Winkelmesssystems 10 vermieden werden - Figur 9.

Zusätzlich unterzieht die Auswerteeinheit vorzugsweise die erfassten Lichtpunkte Pi und/oder die errechneten Mittelpunkte Mm mittels einer Mittelung oder einer statistischen Vorhersage zu erwartender Werte einer Plausibilitätsprüfung, so dass die Bestimmung des Drehwinkes bzw. der Drehwinkel φ sowohl genauer als auch sicherer ist.

Bezugszeichenliste

10    Winkelmesssystem
1     Lichtsender
1a    Lichtstrahl
2     Transparenter Modulator
3     Empfänger

A          Drehachse
B          Bahn der Lichtpunkte
d          Durchmesser
n1, n2     Brechungszahl
M0         Ausgangsmittelpunkt
M1,...Mm   Mittelpunkt der Bahn
P1,...Pi   Lichtpunkt
t          Dicke
x0, y0     Koordinaten des Ausgangsmittelpunktes
xm, ym     Koordinaten des Mittelpunktes
xi, yi     Koordinaten des Lichtpunktes
W          Welle
α          Neigungswinkel
φ          Drehwinkel

**Patentansprüche**

1.  Winkelmesssystem (10) zum Bestimmen eines Drehwinkels (φi) einer drehenden Welle (W), umfassend
    einen Lichtsender (1) zum Aussenden eines Lichtstrahls (1a),
    einen transparenten Modulator (2) zum Modulieren des ausgesendeten und durch den Modulator (2) durchgehenden Lichtstrahls (1a), wobei der Modulator (2) auf der Welle (W) derart montiert ist, dass eine Normale des Modulators (2) bezogen auf den durch den Modulator (2) durchgehenden Lichtstrahl (1a) einen Winkel (a) ungleich Null zu einer Drehachse (A) der Welle (W) aufweist, zumindest einen Empfänger (3) zum Empfangen eines auf dem Empfänger (3) bewegenden Lichtpunktes (P1,...Pi) und zum Ausgeben eines entsprechenden Empfängersignals, wobei der Empfänger (3) eine photosensitive Fläche umfasst und den auftreffenden Lichtpunkt (P1,...Pi) ortauflösend erfasst, und eine Auswerteeinheit eingerichtet zum Auswerten des Empfängersignals und zum Bestimmen des Drehwinkels (φi), wobei die Auswerteeinheit derart ausgebildet ist, dass die Auswerteeinheit aus einer Position des Lichtpunktes (P1,...Pi) auf dem Empfänger (3) den zugehörigen Drehwinkel (φ) der Welle (W) bestimmt,
    **dadurch gekennzeichnet, dass**
    der transparente Modulator (2) eine planparallele Platte mit einer vorgegebenen Dicke (t), einem vorgegebenen Durchmesser (d) und einer vorgegebenen Brechungszahl (n2) umfasst, und der Empfänger (3) eingerichtet ist, den auftreffenden Lichtpunkt (P1,...Pi) ortauflösend in 2-Dimensionen zu erfassen, wobei der Lichtpunkt (P1,...Pi) auf dem Empfänger (3) eine, im Idealfall kreisförmige, Bahn (B) beschreibt,
    und dass die Auswerteeinheit dazu eingerichtet ist, kontinuierlich eine Folge von in einem vorgegebenen Abstand folgenden Lichtpunkten (Pi) in Gruppen aus jeweils mindestens drei nacheinander folgenden Lichtpunkten (P1,...Pi) zu unterteilen und zu jeder Gruppe einen jeweils zugehörigen Mittelpunkt (MO,...Mm) der zugehörigen Bahn (B) auf dem Empfänger (3) zu berechnen, wobei die Auswerteeinheit eine Abweichung zwischen zwei berechneten Mittelpunkten (M0...Mm) von zwei nacheinander folgenden Gruppen von Lichtpunkten (Pi) bei der Bestimmung des Drehwinkels (φi) als Korrekturwert für den Drehwinkel (φi) mitberücksichtigt.

2.  Winkelmesssystem (10) nach Anspruch 1, **dadurch gekennzeichnet, dass** der Auswerteeinheit Bezugskoordinaten (y0, x0) eines Koordinatensystems des Empfängers als Ausgangsmittelpunkt (M0) vorgegeben sind, und die Auswerteeinheit dazu eingerichtet ist, mit Bezug auf die Bezugskoordinaten (y0, x0) einen ersten Lichtpunkt (P1) der Gruppe von mindestens drei Lichtpunkten (P1, P2, P3) zu berechnen.

3.  Winkelmesssystem (10) nach Anspruch 2, **dadurch gekennzeichnet, dass** die Auswerteeinheit dazu eingerichtet ist, den Drehwinkel (φi) anhand einer Formel zu berechnen

    $$\rho i = \arctan^2[(yi - ym) / (xi - xm)],$$

    wobei ρi einen aktuellen Drehwinkel repräsentiert, yi und xi die aktuellen y- und x-Koordinaten des aktuellen Lichtpunktes sind, ym und xm die Koordinaten eines Mittelpunktes (Mm) einer vorhergehenden Gruppe von Lichtpunkten bzw. des Ausgangsmittelpunktes sind, und i und m=i-1 natürliche Zahlen sind.

4.  Winkelmesssystem (10) nach einem der vorhergehenden Ansprüche, **dadurch gekennzeichnet, dass** die Lichtpunkte (P1,...Pi) einer Gruppe einen vorgegebenen geometrischen Abstand zueinander aufweisen, der vorzugsweise eine Mindestlänge eines Vektors zwischen zwei Lichtpunkten (P1,...Pi)

**5.** Winkelmesssystem (10) nach einem der vorhergehenden Ansprüche 1 bis 4, **dadurch gekennzeichnet, dass** die Auswerteeinheit eine Folge der Gruppen aus mindestens drei Lichtpunkten (P1,...Pi) derart erstellt dass kontinuierlich bei einer nachfolgenden Gruppe der erste Lichtpunkt (P1) der vorherigen Gruppe entfernt und ein auf den dritten Lichtpunkt (P3) der vorherigen Gruppe folgender Lichtpunkt (P4) hinzugefügt werden.

**6.** Winkelmesssystem (10) nach Anspruch 5, **dadurch gekennzeichnet, dass** die Auswerteeinheit dazu eingerichtet ist, entsprechend der Folge der Gruppen aus mindestens drei Lichtpunk (P1,...Pi) eine Folge von zu der jeweiligen Gruppe zugehörenden Mittelpunkten (M0,...Mm) zu ermitteln.

**7.** Winkelmesssystem (10) nach einem der vorhergehenden Ansprüche 1 bis 6, **dadurch gekennzeichnet, dass** die Auswerteeinheit dazu eingerichtet ist, die erfassten Lichtpunkte (P1,...Pi) und/oder die errechneten Mittelpunkte (M0,...Mm) mittels einer Mittelung oder einer statistischen Vorhersage zu erwartender Werte einer Plausibilitätsprüfung zu unterziehen.

**8.** Winkelmesssystem (10) nach einem der vorhergehenden Ansprüche 1 bis 7, **dadurch gekennzeichnet, dass** der Empfänger (3) ein PDS-Element oder ein Photodiodenarray umfasst.

**9.** Winkelmesssystem (10) nach einem der vorhergehenden Ansprüche 1 bis 8, **dadurch gekennzeichnet, dass** der zumindest eine Empfänger (3) ausgebildet ist, einen sich auf dem Empfänger (3) bewegenden und durch eine flächige Beleuchtung des Modulators (2) entstehenden Schatten zu detektieren, und die Auswerteeinheit ausgebildet ist, aus einer Position des Schattens auf dem Empfänger (3) den entsprechenden Drehwinkel (φi) zu bestimmen.

**Claims**

**1.** An angle measuring system (10) for determining a rotation angle (φi) of a rotating shaft (W), comprising a light transmitter (1) for emitting a light beam (1a), a transparent modulator (2) for modulating the emitted light beam (1a) passing through the modulator (2), wherein the modulator (2) is mounted on the shaft (W) in such a way that a normal of the modulator (2) relative to the light beam (1a) passing through the modulator (2) has an angle (α) not equal to zero to an axis of rotation (A) of the shaft (W), at least one receiver (3) for receiving a light point (P1,...Pi) and for outputting a corresponding receiver signal, wherein the receiver (3) comprises a photosensitive surface and detects the incident light spot (P1,...Pi) in spatial resolution, and an evaluation unit arranged for evaluating the receiver signal and for determining the angle of rotation (φi), wherein the evaluation unit is constructed in such a way that the evaluation unit is able to detect from a position of the light spot (P1...Pi) on the receiver (3) the associated angle of rotation (φi) of the shaft (W), **characterized in that** the transparent modulator (2) comprises a plane-parallel plate having a predetermined thickness (t), a predetermined diameter (d) and a predetermined refractive index (n2), and the receiver (3) is arranged to detect the incident light spot (P1,...Pi) in a spatial resolution in 2-dimensions, wherein the light spot (P1,...Pi) describes on the receiver (3) an ideally circular path (B), and **in that** the evaluation unit is arranged to continuously divide a sequence of light points (Pi) following at a predetermined distance into groups of at least three successive light points (P1,...Pi) and to calculate to each groups an associated centre point (M0,...Mm) of the associated path (B) on the receiver (3), wherein the evaluation unit takes into account a deviation between two calculated centres (M0...Mm) of two successive groups of light points (Pi) when determining the angle of rotation (φi) as a correction value for the angle of rotation (φi).

**2.** Angle measuring system (10) according to claim 1, **characterized in that** reference coordinates (y0, x0) of a coordinate system of the receiver are predetermined as starting point (M0) for the evaluation unit, and the evaluation unit is arranged to calculate a first light point (P1) of the group of at least three light points (P1, P2, P3) with reference to the reference coordinates (y0, x0).

**3.** Angle measuring system (10) according to claim 2, **characterized in that** the evaluation unit is adapted to calculate the angle of rotation (φi) using a formula pi = arctan2[(yi - ym)/(xi - xm)], where pi represents a current angle of rotation, yi and xi are the current y and x coordinates of the current light point, ym and xm are the coordinates of a center (Mm) of a preceding group of light points and accordingly of the starting center, and i and m=i-1 are natural numbers.

**4.** Angle measuring system (10) according to any one of the preceding claims, **characterized in that** the light points (P1,...Pi) of a group have a predetermined geometric distance from one another, which preferably corresponds to a minimum length of a vector between two light points (P1,...Pi).

**5.** Angle measuring system (10) according to one of the preceding claims 1 to 4, **characterized in that** the evaluation unit creates a sequence of groups of at least three light points (P1,...Pi) such that in a subsequent group the first light point (P1) of the previous group is continuously deleted and a light spot (P4) following the third light spot (P3) of the previous group is added.

6. Angle measuring system (10) according to claim 5, **characterized in that** the evaluation unit is adapted to determine according to the sequence of groups of at least three light points (P1,...Pi) a sequence of belonging to the respective group centers (M0,...Mm).

7. Angle measuring system (10) according to any one of the preceding claims 1 to 6, **characterized in that** the evaluation unit is adapted to the detected light points (P1,...Pi) and / or the calculated centers (M0,...Mm) by means of an averaging or to subject a statistical prediction of expected values to a plausibility check.

8. Angle measuring system (10) according to any one of the preceding claims 1 to 7, **characterized in that** the receiver (3) comprises a PDS element or a photodiode array.

9. Angle measuring system (10) according to any one of the preceding claims 1 to 8, **characterized in that** the at least one receiver (3) is formed for detecting a on the receiver (3) moving and by a flat illumination of the modulator (2) resulting shadow, and the evaluation unit is arranged to determine from a position of the shadow on the receiver (3) the corresponding rotation angle ($\varphi$i).

## Revendications

1. Système de mesure d'angle (10) pour déterminer un angle de rotation ($\varphi$i) d'un arbre en rotation (W), comportant
un émetteur de lumière (1) pour émettre un rayon lumineux (1a),
un modulateur transparent (2) pour moduler le rayon lumineux (1a) émis et traversant le modulateur (2),
le modulateur (2) étant monté sur l'arbre (W) de telle sorte qu'une normale du modulateur (2) par rapport au rayon lumineux (1a) traversant le modulateur (2) présente un angle (a) non zéro par rapport à un axe de rotation (A) de l'arbre (W), au moins un récepteur (3) pour recevoir un point lumineux (P1, ... Pi) se déplaçant sur le récepteur (3) et pour émettre un signal de réception correspondant, le récepteur (3) comprenant une surface photosensible et détectant le point lumineux incident (P1, ... Pi) avec résolution locale, et
une unité d'évaluation conçue pour évaluer le signal de réception et pour déterminer l'angle de rotation ($\varphi$i), l'unité d'évaluation étant réalisée de telle sorte que l'unité d'évaluation détermine l'angle de rotation ($\varphi$i) associé de l'arbre (W) à partir d'une position du point lumineux (P1, ... Pi) sur le récepteur (3),
**caractérisé en ce que**
le modulateur transparent (2) comprend une plaque plane parallèle ayant une épaisseur prédéterminée (t), un diamètre prédéterminé (d) et un indice de réfraction prédéterminé (n2), et
le récepteur (3) est conçu pour détecter le point lumineux incident (P1, ... Pi) avec résolution locale dans deux dimensions,
le point lumineux (P1, ... Pi) sur le récepteur (3) décrivant une trajectoire (B) qui est, dans le cas idéal, circulaire,
et **en ce que** l'unité d'évaluation est conçue pour subdiviser en continu une succession de points lumineux (Pi), se suivant à une distance prédéterminée, pour donner des groupes constitués chacun d'au moins trois points lumineux successifs (P1, ... Pi) et pour calculer pour chaque groupe un centre respectif associé (M0, ... Mm) de la trajectoire (B) associée sur le récepteur (3),
l'unité d'évaluation prenant en compte, en tant que valeur de correction pour l'angle de rotation ($\varphi$i), un écart entre deux centres calculés (M0 ... Mm) de deux groupes successifs de points lumineux (Pi) lors de la détermination de l'angle de rotation ($\varphi$i).

2. Système de mesure d'angle (10) selon la revendication 1,
**caractérisé en ce que**
des coordonnées de référence (y0, x0) d'un système de coordonnées du récepteur sont imposées en tant que centre de départ (M0) à l'unité d'évaluation, et l'unité d'évaluation est conçue pour calculer un premier point lumineux (P1) du groupe constitué d'au moins trois points lumineux (P1, P2, P3) en se référant aux coordonnées de référence (y0, x0).

3. Système de mesure d'angle (10) selon la revendication 2,
**caractérisé en ce que**
l'unité d'évaluation est conçue pour calculer l'angle de rotation ($\varphi$i) en se basant sur une formule

$$\rho i = \arctan^2 [(yi - ym) / (xi - xm)]$$

dans laquelle
pi représente un angle de rotation actuel, yi et xi sont les coordonnées y et x actuelles du point lumineux actuel, ym et xm sont les coordonnées d'un centre (Mm) d'un groupe précédent de points lumineux ou du centre de départ, et i et m = i - 1 sont des entiers naturels.

**4.** Système de mesure d'angle (10) selon l'une des revendications précédentes,
**caractérisé en ce que**
les points lumineux (P1, ... Pi) d'un groupe présentent une distance géométrique prédéterminée les uns des autres, qui correspond de préférence à une longueur minimale d'un vecteur entre deux points lumineux (P1, ... Pi).

**5.** Système de mesure d'angle (10) selon l'une des revendications précédentes 1 à 4,
**caractérisé en ce que**
l'unité d'évaluation établit une succession de groupes d'au moins trois points lumineux (P1, ... Pi) de telle sorte que dans un groupe suivant, le premier point lumineux (P1) du groupe précédent est enlevé en continu et un point lumineux (P4) qui suit le troisième point lumineux (P3) du groupe précédent est ajouté en continu.

**6.** Système de mesure d'angle (10) selon la revendication 5,
**caractérisé en ce que**
l'unité d'évaluation est conçue pour déterminer, en correspondance de la succession des groupes d'au moins trois points lumineux (P1, ... Pi), une succession de centres (M0, ... Mm) associés au groupe respectif.

**7.** Système de mesure d'angle (10) selon l'une des revendications précédentes 1 à 6,
**caractérisé en ce que**
l'unité d'évaluation est conçue pour soumettre à un contrôle de vraisemblance les points lumineux détectés (P1, ... Pi) et/ou les centres calculés (M0, ... Mm) par calcul d'une moyenne ou par prédiction statistique des valeurs à attendre.

**8.** Système de mesure d'angle (10) selon l'une des revendications précédentes 1 à 7,
**caractérisé en ce que**
le récepteur (3) comprend un élément PDS ou un réseau de photodiodes.

**9.** Système de mesure d'angle (10) selon l'une des revendications précédentes 1 à 8,
**caractérisé en ce que**
ledit au moins un récepteur (3) est réalisé pour détecter une ombre qui se déplace sur le récepteur (3) et qui résulte d'une illumination surfacique du modulateur (2), et l'unité d'évaluation est réalisée pour déterminer l'angle de rotation ($\varphi i$) correspondant à partir d'une position de l'ombre sur le récepteur (3).

Fig. 1

Fig. 2

Fig. 3.1

Fig. 3.2

Fig. 3.3

Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- EP 2657652 B1
- JP H0850036 A

- EP 2950056 A1